(19) Europäisches Patentamt
European Patent Office
Office européen des brevets

(11) **EP 4 253 132 A1**

(12) **EUROPEAN PATENT APPLICATION**

(43) Date of publication:
**04.10.2023 Bulletin 2023/40**

(21) Application number: **23164121.8**

(22) Date of filing: **24.03.2023**

(51) International Patent Classification (IPC):
**B60L 53/65** (2019.01)     **B60L 53/14** (2019.01)
**B60L 53/30** (2019.01)     **B60L 53/66** (2019.01)
**B60L 58/12** (2019.01)     **B60L 53/67** (2019.01)

(52) Cooperative Patent Classification (CPC):
**B60L 53/67;** B60L 53/14; B60L 53/305; B60L 53/66;
B60L 53/665; B60L 58/12; B60L 2240/62;
B60L 2240/68

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.03.2022 GB 202204340**

(71) Applicant: **Jaguar Land Rover Limited
Coventry, Warwickshire CV3 4LF (GB)**

(72) Inventors:
• **Choudhary, Bhramar**
  **Coventry, CV3 4LF (GB)**
• **Choudhary, Ravi**
  **Coventry, CV3 4LF (GB)**
• **Balharan, Pulkit**
  **Coventry, CV3 4LF (GB)**

(74) Representative: **Jaguar Land Rover Patents
Department
Patents Department W/1/073
Abbey Road, Whitley
Coventry CV3 4LF (GB)**

(54) **METHOD AND APPARATUS FOR MATCHING VEHICLES**

(57)    Aspects of the present invention relate to a vehicle matching system (1) for matching a pair of vehicles (V1, V2) for vehicle-to-vehicle charging. The vehicle matching system (1) comprising a controller (60) configured to identify a first vehicle (V1) comprising a first traction battery (11); and identify a second vehicle (V2) comprising a second traction battery (31). The controller (6) determines a first location (s1) of the first vehicle (V1) and a first state of charge (SOC1) of the first traction battery (11); and a second location (s2) of the second vehicle (V2) and a second state of charge (SOC2) of the second traction battery (31). A charging location (CCL) is identified for connecting the first and second vehicles (V1, V2) to each other to perform vehicle-to-vehicle charging. A first route profile (P1) is determined comprising the first location (s1) and the charging location (CCL) and a first cost (wP1) determined for the first vehicle (V1) to traverse the first route profile (P1). The controller (60) is configured to match the first vehicle (V1) to the second vehicle (V2) in dependence on the determined first cost (wP1). Aspects of the present invention also relate to a method of matching first and second vehicles (V1, V2) to perform vehicle-to-vehicle charging, and a non-transitory computer-readable medium.

FIG. 1

**Description**

**TECHNICAL FIELD**

The present disclosure relates to a method and apparatus for matching vehicles. Aspects of the invention relate to a vehicle matching system; a method of matching vehicles; and a non-transitory computer-readable medium for causing a processor to perform the method.

**BACKGROUND**

There is a continuing need to develop and expand the charging infrastructure to provide charging stations for electric vehicles (EVs), such as battery electric vehicles (BEVs). Building charging stations and the related charging infrastructure requires considerable investment and may place unwanted limitations on the use of electric vehicles, for example restricted to the grid infrastructure. The charging infrastructure may be limited in remote areas, for example in rural settings. However, problems may also arise in urban areas due to heavy usage or congestion of charging stations, for example at busy times. A vehicle may require charging on an urgent basis, for example to complete a journey or a planned route.
It is an aim of the present invention to address one or more of the disadvantages associated with the prior art.

**SUMMARY OF THE INVENTION**

Aspects and embodiments of the invention provide a vehicle matching system, a method of matching a pair of vehicles, and a non-transitory computer-readable medium as claimed in the appended claims
According to an aspect of the present invention there is provided a vehicle matching system for matching a pair of vehicles for vehicle-to-vehicle charging, the vehicle matching system comprising a controller configured to:

receive a charging request from a first vehicle comprising a first traction battery;
determine a first location of the first vehicle and a first state of charge of the first traction battery;
identify a second vehicle comprising a second traction battery;
determine a second location of the second vehicle and a second state of charge of the second traction battery;
identify a charging location for connecting the first and second vehicles to each other to perform vehicle-to-vehicle charging;
determine a first route profile comprising the first location and the charging location and determine a first cost for the first vehicle to traverse the first route profile; and
match the first vehicle to the second vehicle in dependence on the determined first cost. The vehicle matching system is configured to match (or pair) the first and second vehicles to perform vehicle-to-vehicle charging. At least in certain embodiments, the vehicle matching system may match a pair of first and second vehicles identified as being suitable for performing a vehicle-to-vehicle charging operation. This may facilitate charging of a vehicle where no mains (gird) charging station is available. At least in certain embodiments, the charging control system may provide alternative charging options to the grid infrastructure. By facilitating vehicle-to-vehicle charging, it is not necessary to rely exclusively on the grid-based charging infrastructure. This may provide greater flexibility and/or convenience for a user.

Identifying the second vehicle may comprise determining an availability of the second vehicle to provide vehicle-to-vehicle charging using the second traction battery.
The first cost may be determined to enable selection of the charging location from a plurality of candidate charging locations. The charging location may be selected based on user-configurable parameters, such as financial cost, time, proximity and efficiency. The first cost may be determined in dependence on the first state of charge of the first traction battery. A weighting may be applied in dependence on the first state of charge. For example, the weighting may be applied to bias away from matching vehicles which are at a limit of the available range (for example, based on determined state of charge).
The charging location may correspond to the second location. The first vehicle may travel to the second vehicle. Alternatively, the charging location may be distinct from the first and second locations.
The vehicle matching system may be configured to determine a first destination of the first vehicle. The first route profile may comprise the first location, the charging location and the first destination. The charging location may be disposed partway along the first route profile, for example between the first location and a first destination. The first cost may be determined for the first vehicle to traverse the first route profile from the first location to the charging location and from the charging location to the first destination.

The controller may be configured to match the first vehicle to the second vehicle when the determined first cost is less than or equal to a predetermined threshold.

The controller may be configured to determine a second route profile from the second location to the charging location. A second cost may be determined for the second vehicle to traverse the second route profile. The second cost may be determined in dependence on the second state of charge of the second traction battery.

The charging location may be identified as a target location having the smallest first cost or second cost.

The vehicle matching system may be configured to determine a second destination of the second vehicle, the second route profile comprising the second location, the charging location and the second destination. The charging location may be disposed partway along the second route profile, for example between the second location and a second destination. The second cost may be determined for the second vehicle to traverse the second route profile from the second location to the charging location and from the charging location to the second destination.

The controller may be configured to match the first vehicle to the second vehicle when the sum of the first cost and the second cost is less than or equal to a predetermined threshold.

The controller may be configured to identify a plurality of candidate charging locations and to select the charging location from the plurality of candidate charging locations.

The controller may be configured to determine at least one first route profile from the first location to each of the plurality of candidate charging locations and to determine the first cost for traversing the or each first route profile.

The controller is configured to determine at least one second route profile from the second location to each of the plurality of candidate charging locations and to determine the second cost for traversing the or each second route profile.

The charging location may be identified in respect of the first and second costs. The charging location may be identified as a target location having the smallest combined first and second costs. The controller may be configured to sum the first cost and the second cost in respect of each of the candidate charging locations and to select the charging location which corresponds to the lowest sum of the first and second costs.

The controller may be configured to prioritise the first vehicle or the second vehicle. For example, a weighting may be applied to determine the first cost or the second cost.

The controller may be configured to select a plurality of target locations and to determine a first estimated arrival time of the first vehicle and a second estimated arrival time of the second vehicle at each of the plurality of target locations. The identification of the plurality of candidate charging locations may comprise selecting the or each said target location for which the first and second estimated arrival times are within a predetermined time period.

The vehicle-to-vehicle charging may be performed at least partially to charge the first traction battery using the second traction battery.

According to an aspect of the present invention there is provided a method of matching a pair of vehicles for vehicle-to-vehicle charging, the method comprising:

identifying a first vehicle comprising a first traction battery;
determining a first location of the first vehicle and a first state of charge of the first traction battery;
identifying a second vehicle comprising a second traction battery;
determining a second location of the second vehicle and a second state of charge of the second traction battery;
identifying a charging location for connecting the first and second vehicles to each other to perform vehicle-to-vehicle charging;
determining a first route profile comprising the first location and the charging location and determining a first cost for the first vehicle to traverse the first route profile; and
matching the first vehicle to the second vehicle in dependence on the determined first cost.

According to a further aspect of the present invention there is provided a non-transitory computer-readable medium having a set of instructions stored therein which, when executed, cause a processor to perform the method(s) described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

## BRIEF DESCRIPTION OF THE DRAWINGS

One or more embodiments of the invention will now be described, by way of example only, with reference to the accompanying drawings, in which:

Figure 1 shows a schematic representation of the vehicle matching system to match vehicles to perform vehicle-to-vehicle charging in accordance with an embodiment of the present invention;

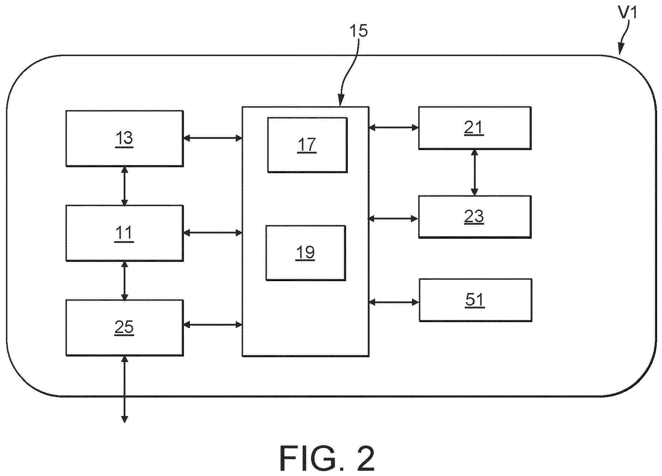

Figure 2 shows a schematic representation of a first vehicle requesting which outputs a charging request to perform vehicle-to-vehicle charging;

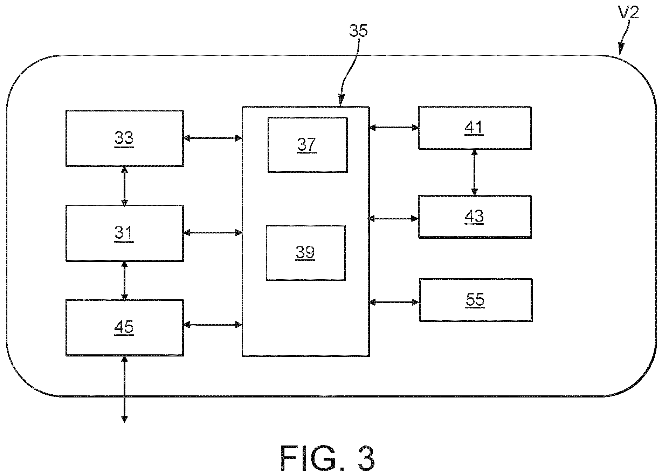

Figure 3 shows a schematic representation of a second vehicle matched to the first vehicle to perform vehicle-to-vehicle charging;
Figure 4 shows a schematic representation of a matching server configured to match the first and second vehicle;
Figure 5 shows a schematic representation of the matching server shown in Figure 4;
Figure 6 shows a block diagram representing operation of the vehicle matching system in accordance with an embodiment of the present invention;
Figure 7 illustrates first and second route profiles mapped for first and second vehicles respectively;
Figure 8 illustrates the determination of a plurality of candidate charging locations for the first and second vehicles shown in Figure 7;
Figure 9 illustrates modified first and second route profiles to enable vehicle-to-vehicle charging at the candidate charging location determined as having the lowest route profile cost;
Figure 10 illustrates operation of the matching algorithm in a scenario in which a travel capacity of the second vehicle is set as zero;
Figure 11 illustrates operation of the matching algorithm in a scenario in which a travel capacity of the first vehicle is set as zero;
Figure 12A illustrates a vehicle-to-vehicle charging using an alternating current to direct current converter; and
Figure 12B illustrates a vehicle-to-vehicle charging using direct current.

## DETAILED DESCRIPTION

A vehicle matching system 1 in accordance with an embodiment of the present invention is described herein with reference to the accompanying Figures. The vehicle matching system 1 is configured to match a pair of vehicles Vn to perform vehicle-to-vehicle (V2V) charging. The vehicles Vn are road vehicles, such as automobiles. The vehicles Vn may, for example, comprise a battery electric vehicle (BEV), a plug-in hybrid electric vehicle (PHEV) or a hybrid electric vehicle (HEV).

The vehicle matching system 1 in the present embodiment is implemented by a vehicle matching server 3. The vehicle matching server 3 is a remote server and is configured to communicate with a plurality of the vehicles Vn over a wireless communication network. The vehicle matching server 3 is operative to receive a charging request generated by one of the vehicles Vn. The charging request indicates that a charge is required for an onboard traction battery and requests identification of one or more other vehicles Vn available to provide a charging function. The or each vehicle Vn available to provide the charging function may be identified as such by a charging available flag. The charging available flag may be generated in dependence on a user input and/or in dependence on current vehicle operating parameters, such as a state of charge (SOC) of an onboard traction battery. The charging available flag may be transmitted to the vehicle matching server 3 to indicate that the vehicle Vn is available to provide the charging function. A user may configure the charging available flag to indicate that charging is always available, or to indicate that charging is available on request, for example in dependence on a positive response to a charging invitation issued by the vehicle matching system 1. In dependence on the charging request, the vehicle matching server 3 communicates with a plurality of the other vehicles Vn to identify one or more of the vehicles Vn suitable for supplying electric current to provide a charging function. The vehicle matching server 3 in the present embodiment is configured to perform the matching function with those vehicles Vn identified as being available to provide a charging function. Alternatively, or in addition, the vehicle matching server 3 may communicate with the vehicles Vn to request a charging opportunity (irrespective of whether a charging available flag has been generated for that vehicle Vn). The vehicle matching server 3 may, for example, communicate with vehicles Vn within a predetermined range of the vehicle Vn that generated the charging request. The vehicle matching server 3 implements a matching algorithm to identify potential matching vehicles to form one or more pairs of the vehicles Vn suitable for performing vehicle-to-vehicle charging.

The operation of the vehicle matching server 3 is described herein with reference to a first vehicle V1 and a second vehicle V2. The first vehicle V1 generates the charging request. A user has indicated that the second vehicle V2 is available to provide a charging function and a charging available flag is generated. The matching algorithm is executed by the vehicle matching server 3 to determine if the second vehicle V2 can satisfy the charge request. It will be understood that the matching algorithm may be applied to a plurality of different vehicle pairs. As described herein, a cost function may be applied to each candidate pair of the vehicles Vn to identify the most appropriate match. In a variant, at least some of the functions of the matching algorithm may be executed by one of the vehicles Vn.

The first vehicle V1 comprises a first traction battery 11 for supplying electrical power to one or more first traction motors 13. The first vehicle V1 comprises a first controller 15 having at least one first electronic processor 17 and a first system memory 19. The first controller 15 is configured to determine a first state of charge SOC1 of the first traction battery 11. The first vehicle V1 comprises a first navigation system 21 for determining a geospatial location of the first vehicle V1. The first controller 15 is configured to communicate with the navigation system 21 to determine the geospatial location of the first vehicle V1. The first controller 15 may also access a vehicle communication network, such as a CAN bus, to determine vehicle operating parameters, such as a reference speed VREF1 of the first vehicle V1.

The first vehicle V1 comprises a first wireless communication module 23 for wireless communication with the vehicle matching server 3. The first wireless communication module 23 is operative selectively to transmit a charge request signal SCR1 to the vehicle matching server 3. The charge request signal SCR1 may, for example, be transmitted in dependence on a user input. Alternatively, the charge request signal SCR1 may be generated automatically, for example in dependence on a determination that charging of the first traction battery 11 is required to complete a current route. The first wireless communication module 23 is operative also to transmit a first location data LOCD1 identifying a first (start) location s1 of the first vehicle V1. The first wireless communication module 23 may also transmit a first destination data DESD1 identifying a first (end) destination d1 of the first vehicle V1. As described herein, the first location s1 and the first destination d1 can be mapped to a digital representation (or model) of a road network. The first location s1 may be determined by the first navigation system 21. The first destination d1 may be entered into the first navigation system 21 by a user, or may be determined based on one or more previous destinations of the first vehicle V1. If the first vehicle V1 is stationary, for example parked, the first location s1 and the first destination d1 may be the same as each other. A first travel capacity value $\alpha$ is defined to determine a distance that the first vehicle V1 can travel to perform the charging operation. The first travel capacity value $\alpha$ may represent a total additional distance that the first vehicle V1 may travel to complete the charging operation, for example to deviate from a planned route. The first travel capacity value $\alpha$ may be defined in dependence on one or more of the following: a planned route of the first vehicle V1; the first state of charge SOC1 of the first traction battery 11; a charge requirement (for example a quick (partial) charge or a full charge); and whether the first vehicle V1 is moving or stationary (for example, parked, immobile or an emergency). The first travel capacity value $\alpha$ may be defined as zero (0) if no deviation is permitted or if the first vehicle V1 is stationary. The additional distance that the first vehicle 1 may deviate from a route may be determined with reference to a modelled route from the first location s1 to the first destination d1, for example a shortest possible route, a quickest possible route or a most energy efficient route.

The first vehicle V1 comprises a first charging module 25 for supplying electric current to the first traction battery 11 to store energy (i.e., to charge the first traction battery 11). The first charging module 25 may comprise an AC-DC converter for converting alternating current (AC) to direct current (DC) to charge the first traction battery 11. Alternatively, the first charging module 25 may comprise a direct current (DC) charging module for receiving direct current (DC). The first charging module 25 is disposed onboard the first vehicle V1 and can be connected to an external power source to receive electric current to charge the first traction battery 11. The external power source may, for example, comprise a mains electrical supply or an external (offboard) battery. Alternatively, or in addition, the first charging module 25 may receive electric current from an onboard generator, for example an internal combustion engine (not shown) disposed in the first vehicle V1. As described herein, the first charging module 25 is selectively configurable to output electric current to store energy in an external battery.

The second vehicle V2 comprises a second traction battery 31 for supplying electrical power to one or more second traction motors 33. The second vehicle V2 comprises a second controller 35 having at least one second electronic processor 37 and a second system memory 39. The second controller 35 is configured to determine a second state of charge SOC2 of the second traction battery 31. The second vehicle V2 comprises a second navigation system 41 for determining a geospatial location of the second vehicle V2. The second controller 35 is configured to communicate with the second navigation system 41 to determine the geospatial location of the second vehicle V2. The second controller 35 may also access a vehicle communication network, such as a CAN bus, to determine vehicle operating parameters, such as a reference speed VREF2 of the second vehicle V2.

The second vehicle V2 comprises a second wireless communication module 43 for wireless communication with the vehicle matching server 3. The second wireless communication module 43 may perform similar functions to the first wireless communication module 23, for example to transmit a charge request signal SCR2. However, for the sake of brevity, the description herein will detail the operation of the second wireless communication 43 following generation of the charge request signal SCR1 generated by the first vehicle V1. The second wireless communication module 43 is operative to transmit a charge authorisation signal SAUT1 to the vehicle matching server 3 to authorise a charging operation. The charge authorisation signal SAUT1 may, for example, be transmitted in dependence on a user input. Alternatively, the charge request signal SCR1 may be generated automatically, for example in dependence on the charge available flag being set to indicate that a charging operation is always available. The second wireless communication module 43 is operative also to transmit a second location data LOCD2 identifying a second (start) location s2 of the second vehicle V2. The second wireless communication module 43 may also transmit a second destination data DESD2 identifying a second (end) destination d2 of the second vehicle V2. As described herein, the second location s2 and the second destination d2 can be mapped to a digital representation (or model) of a road network. The second destination d2 may be entered into the second navigation system 41 by a user or may be determined based on previous destinations for the second vehicle V2. The second location s2 may be determined by the navigation system 41. The second destination d2 may be entered into the second navigation system 41 by a user or may be determined based on one or more previous destinations of the second vehicle V2. If the second vehicle V2 is stationary, for example parked, the second location s2 and the second destination d2 may be the same as each other. A second travel capacity value $\beta$ is defined to determine a distance that the second vehicle V2 can travel to perform the charging operation. The second travel capacity value $\beta$ may represent a total additional distance that the second vehicle V2 may travel to complete the charging operation, for example to deviate from a planned route. The second travel capacity value $\beta$ may be defined in dependence on one or more of the following: a planned route of the second vehicle V2; the second state of charge SOC2 of the second traction battery 31; a charge requirement (for example a quick (partial) charge or a full charge); and whether the second vehicle V2 is moving or stationary (for example, parked, immobile or an emergency). The second travel capacity value $\beta$ may be defined as zero (0) if no deviation is permitted or if the second vehicle V2 is stationary. The additional distance that the second vehicle 2 may deviate from a route may be determined with reference to a modelled route from the second location s2 to the second destination d2, for example a shortest possible route, a quickest possible route or most energy efficient route.

The second vehicle V2 comprises a second charging module 45 for supplying electric current to the second traction battery 31 to store energy (i.e., to charge the second traction battery 31). The second charging module 45 may comprise an AC-DC converter for converting alternating current (AC) to direct current (DC) to charge the second traction battery 31. Alternatively, the second charging module 45 may comprise a direct current (DC) charging module for receiving direct current (DC). The second charging module 45 is disposed onboard the second vehicle V2 and can be connected to an external power source to receive electric current to charge the second traction battery 31. The external power source may, for example, comprise a mains electrical supply or an external (offboard) battery. As described herein, the second charging module 45 can be connected to the first vehicle V1 to receive electric current from the first traction battery 11 to charge the second traction battery 31. Thus, the first and second vehicles V1, V2 may be connected to each other to perform vehicle-to-vehicle charging. The connection between the first and second vehicles V1, V2 is a wired connection, for example comprising an electrical cable having connectors for connection to the first and second charging modules 25, 45.

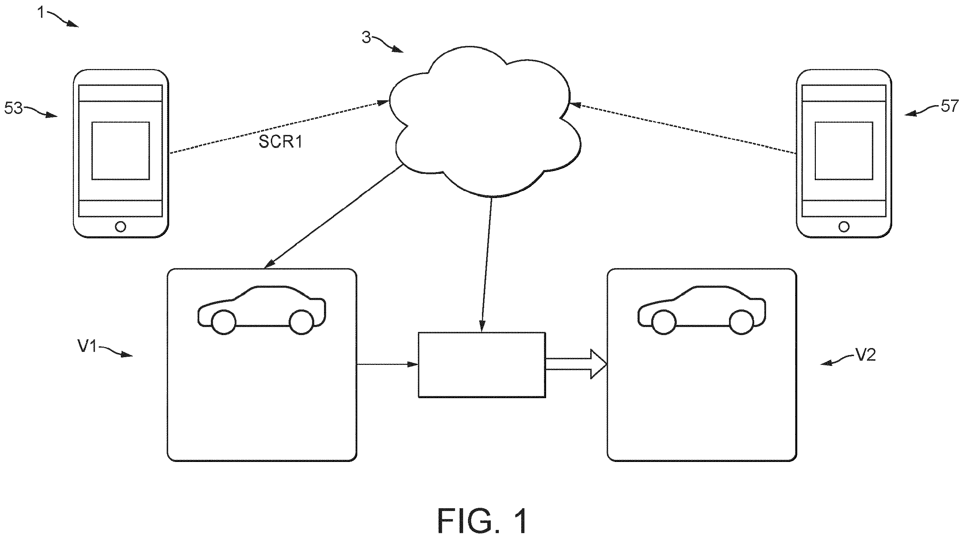

A first human machine interface (HMI) 51 is disposed on the first vehicle V1. The first HMI 51 may, for example, comprise a touch screen provided in the first vehicle V1 for detecting user inputs. The first HMI 51 is operative to control the first charging module 25 and to communicate with the vehicle matching server 3. A user may, for example, operate the first HMI 51 to request a charging operation and/or to authorise a charging operation. The first HMI 51 also enables access to a first user account linked to the first vehicle V1. The first user account may be accessed securely by communication with the vehicle matching server 3. The first user account may be used to make payments for charging the first traction battery 11; and/or to receive payments for using the first traction battery 11 for supplying electric current to another vehicle. Alternatively, or in addition, a communication device, such as a cellular (mobile) telephone, may be used to communicate with the vehicle matching server 3. In the present embodiment, a first communication device 53 (shown in Figure 1) is associated with the first vehicle V1. The first communication device 53 may, for example, provide access to the first user account. A software application operating on the first communication device 53 is configured to communicate with the vehicle matching server 3. The first communication device 53 may be used instead of, or in addition to, the first navigation system 21 provided on the first vehicle V1. For example, the first communication device 53 may determine the first location s1 and/or the first destination d1 of the first vehicle V1. The first communication device 53 may be used instead of, or in addition to, the first wireless communication module 23 provided on the first vehicle V1 for communication with the vehicle matching server 3.

A second human machine interface (HMI) 55 is disposed on the second vehicle V2. The second HMI 55 may, for example, comprise a touch screen provided in the second vehicle V2 for detecting user inputs. The second HMI 55 is operative to control the second charging module 45 and to communicate with the vehicle matching server 3. A user may, for example, operate the second HMI 55 to request and/or authorise a charging operation. The second HMI 55 also enables access to a second user account linked to the second vehicle V2. The second user account may be accessed securely by communication with the vehicle matching server 3. The second user account may be used to make payments for charging the second traction battery 31; and/or to receive payments for using the second traction battery 31 for supplying electric current to another vehicle. Alternatively, or in addition, a communication device, such as a cellular (mobile) telephone, may be used to communicate with the vehicle matching server 3. A second communication device 57 (shown in Figure 1) is associated with the second vehicle V2. The second communication device 57 may, for example, provide access to the second user account. A software application operating on the second communication device 57 is configured to communicate with the vehicle matching server 3. The second communication device 57 may be used instead of, or in addition to, the second navigation system 41 provided on the second vehicle V2. For example, the second communication device 57 may determine the second location s2 and/or the second destination d2 of the second vehicle V2. The second communication device 57 may be used instead of, or in addition to, the second wireless communication module 43 provided on the second vehicle V2 for communication with the vehicle matching server 3.

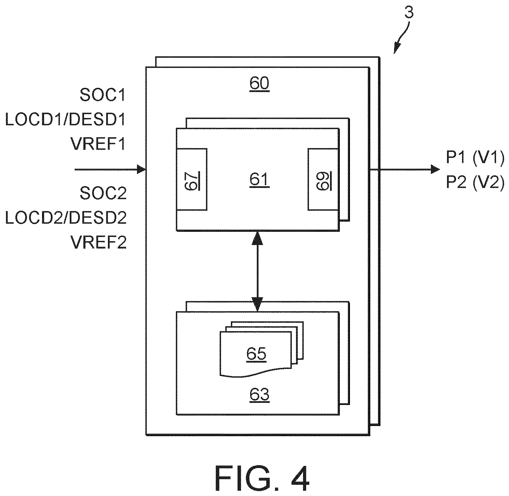

As shown in Figure 4, the vehicle matching server 3 comprises a controller 60. The controller 60 comprises at least one electronic processor 61 and a memory device 63. The server processor 61 is configured to execute a set of computational instructions 65 stored on the memory device 63. The computational instructions 65 cause the server processor 5 to perform the method(s) described herein. The server processor 61 has at least one electrical input 67 and at least one electrical output 69. The at least one electrical input 67 is configured to receive the charge request from the first vehicle V1. The at least one electrical input 67 receives the first location data LOCD1 and the first destination data DESD1 identifying the first location s1 and the first destination d1 of the first vehicle V1. The at least one electrical input 67 receives the second location data LOCD2 and the second destination data DESD2 identifying the second location s2 and the second destination d2 of the second vehicle V2. The at least one electrical input 67 also receives the first and second states of charge SOC1, SOC2 of the first and second traction batteries 11, 31 respectively.

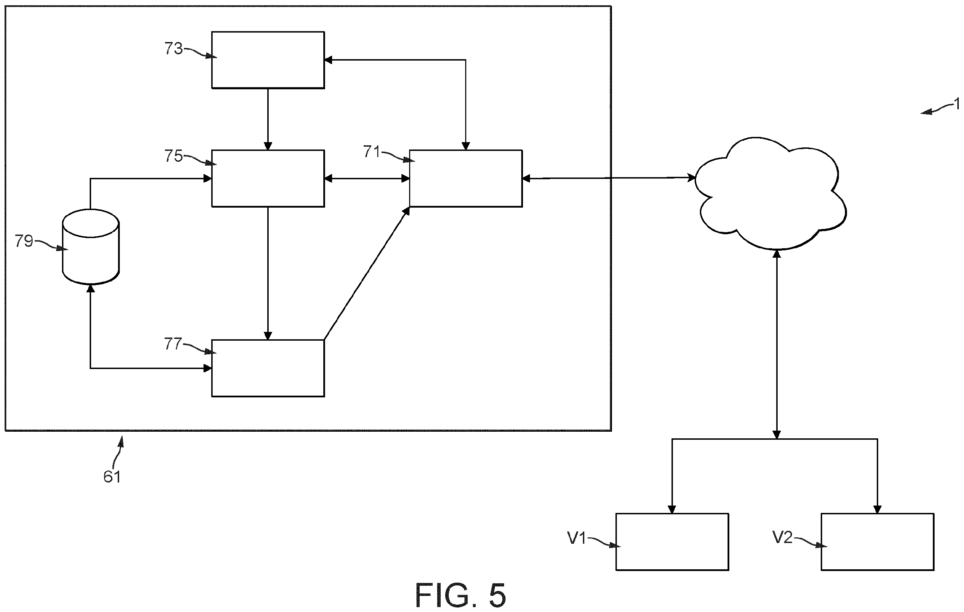

A schematic representation of the modules implemented by the vehicle matching server 3 is shown in Figure 5. The server processor 61 implements a service interface 71, a mapping module 73, a dispatch engine 75, a matching module 77 and a database 79. The service interface 71 is provided to manage communication with the first and second vehicles V1, V2 over a wireless network. The service interface 71 is configured to receive a charging request issued from the first vehicle V1 and to output a confirmation of the charging process. The charging request is output from the service interface 71 to the dispatch engine 75. The service interface 71 outputs map data, such as the location data LOCD1, LOCD2 and the destination data DESD1, DESD2 to the mapping module 73. The mapping module 73 provides a mapping function to generate the first route profile p1 and the second route profile p2. The mapping module 73 also outputs traffic data and/or estimated time of arrival (ETA) data for the first vehicle V1 and/or the second vehicle V2 to the dispatch engine 75. The dispatch engine 75 outputs location data for the first and second vehicles V1, V2 to the matching module 77. The matching module 77 is configured to implement a matching algorithm to match the first and second vehicles V1, V2 (as described herein). The matching module 77 accesses the database 79, for example to access one or more of the following: historical data; a first vehicle profile; a first user profile associated with the first vehicle V1; a second vehicle profile; a second user profile associated with the second vehicle V2; and details of a route profile. The matching module 77 matches the first and second vehicles V1, V2 and outputs a vehicle match trigger and a display trigger to the service interface 71. The service interface 71 outputs, for example by transmission via the wireless communication network, the map data to the first and second vehicles V1, V2, for example to identify the first and second route profiles p1, p2 and the charging location. The service interface 71 outputs the vehicle match trigger and the display trigger to the first and second vehicle V1, V2. The vehicle match trigger and the display trigger are output to the first HMI 51 and the second HMI 55, for example for display on a screen.

In this manner, the respective users are able to accept the displayed match via the first and second HMIs 51, 55, and upon acceptance by the respective users, the respective navigation systems 21, 41 can use the received map data to guide the first and second vehicles V1, V2 to the charging location.

The matching module 77 implements the matching algorithm to match the first and second vehicles V1, V2. The matching algorithm in the present embodiment comprises a minimum path pair (MPP) algorithm which is implemented with reference to the first state of charge SOC1 and/or the second state of charge SOC2. The matching algorithm uses as an input the first location s1 and first destination d1 of the first vehicle V1; the second location s2 and second destination d2 of the second vehicle V2; and the first and second travel capacity values $\alpha$, $\beta$ defined for the first and second vehicles V1, V2 respectively. The matching module 77 uses known methods to determine a minimum route profile p between a location and a destination. This is applied in relation to a road network to plan a route from the current location to a destination. The matching algorithm implemented by the vehicle matching server 3 also takes into account at least one of the first state of charge SOC1 and the second state of charge SOC2. As outlined above, the first and second travel capacity values $\alpha$, $\beta$ may be defined in dependence on the first and second states of charge SOC1, SOC2 respectively.

A road network is modelled as an undirected weighted graph G = (V, E) where V and E represent the set of nodes and the set of edges of G, respectively. A non-negative weight $w(v_i, v_j)$ is associated with each edge $(v_i, v_j) \in E$ of the graph G. A route profile (path) p in the graph G is a sequence of nodes $(v_1, v_2, ..., v_N)$, where $(v_i, v_{i+1})$ is an edge in E, for $1 \le i < N$. The route profile p connects the source node $v_1$ and the destination node $v_N$. A route profile cost w(p) of a route profile p is defined as the sum of weights of its constituent edges.

$$w(p) = w(v1, v2) + ... + w(vi, vi+1) + ... + w(vN-1, vN)$$

The first location s1 and the first destination d1 represent the source and destination points of the first vehicle V1. The second location s2 and the second destination d2 represent the source and destination points of the second vehicle V2. The weight $w(v_i, v_j)$ associated with each edge of the graph G may be modified in dependence on the determined state of charge SOC. For example, the weight $w(v_i, v_j)$ applied to the edges of the route profile p may be modified in dependence on the determined state of charge SOC of the traction battery 11, 31 of the respective first and second vehicles V1, V2. One or more additional component, such as time and/or distance can be used to modify the edge weight. For example, traffic data may be used to determine a time cost of travel between nodes. The time cost may be used to modify the weight with that quantity. One or more components, such as time and SOC, may be dynamic; and/or one or more components, such as distance, may be fixed. Different combinations (like the importance attached to each component) can modify edge weights. To cover additional cases, in a single route profile the make-up of each edge weight might be different. For instance, a time cost associated with one or more edges in the route profile might be more important than an SOC cost.

The matching algorithm determines a first route profile p1 and a second route profile p2. The first route profile p1 starts at the first location s1 and ends at the first destination d1. The second route profile p2 starts at the second location s2 and ends at the second destination d2. The matching algorithm calculates the first and second route profiles p1, p2 to intersect at a node of the graph G. The intersection node represents a candidate charging location CCL(n) for the first and second vehicles V1, V2. The or each intersection node may correspond to a location in the road network determined as being suitable for performing vehicle-to-vehicle charging. For example, a suitable charging location may comprise a car park or other designated area. The matching algorithm is configured to determine at least one charging location on the road network and to identify the corresponding intersection node of the graph G. The intersection node may be user-defined, for example a user associated with the first vehicle V1 or the second vehicle V2 may define the intersection node. The current location of one of the first and second vehicles V1, V2 may be defined as the intersection node. For example, if the second vehicle V2 is parked (the second location s2 and the second destination d2 may be the same as each other), the second location s2 may be defined as the intersection node on the first route profile p1.

The route profile cost w(p) is calculated for each of the first and second route profiles p1, p2. The first route profile cost w(p1) is calculated as a sum of the weights of the constituent edges of the first route profile p1. The second route profile cost w(p2) is calculated as a sum of the weights of the constituent edges of the second route profile p2. The matching algorithm performs a check to determine that the first route profile cost w(p1) is less than the first travel capacity value $\alpha$ (i.e., $w(p1) < \alpha$). The matching algorithm performs a check to determine that the second route profile cost w(p2) is less than the second travel capacity value $\beta$ (i.e., $w(p1) < \beta$). This process may be performed in respect of one or more intersection nodes representing different candidate charging locations CCL(n). A plurality of the intersection nodes are identified. The matching algorithm may identify the intersection nodes in dependence on the first travel capacity value $\alpha$ and the second travel capacity value $\beta$. Alternatively, or in addition, the matching algorithm may identify the or each intersection node within an available range of the first vehicle V1 and/or the second vehicles V2. The available range may be calculated in respect of a state of charge SOC of the respective traction batteries 11, 31. The matching algorithm may be configured to identify the or each intersection node within an available range of each of the first and second vehicles V1, V2 calculated in dependence on the determined first and second states of charge SOC1, SOC2, respectively. Alternatively, or in addition, the matching algorithm may identify the or each intersection node in dependence on a temporal parameter. For example, the or each intersection node may be identified to ensure that an expected arrival time of each of the first and second vehicles V1, V2 at the candidate charging location CCL(n) is at a predetermined time or within a predetermined time period.

First and second route profiles p1, p2 are determined for each of the intersection nodes. The first route profile costs w(p1) represents a first cost associated with the first route profiles p1. The second route profile cost w(p2) represents a second cost associated with the second route profile p2. The first and second route profile costs w(p1), w(p2) are calculated in respect of each of the first and second route profiles p1, p2. In particular, the first and second route profile costs w(p1), w(p2) are calculated for the first and second route profiles p1, p2 extending from the first and second locations s1, s2 to the respective first and second destinations p1, p2 via the charging location. The matching algorithm identifies the first and second route profiles p1, p2 for which the sum of the first and second route profile costs w(p1), w(p2) is smallest (i.e., w(p1) + w(p2) is minimum). It will be understood that the sum of the first and second route profile costs w(p1), w(p2) represents a total cost associated with the first and second route profiles p1, p2. For a given pair of the first and second vehicles V1, V2, the matching algorithm may determine the first and second route profiles p1, p2 (incorporating an intersection node representing a suitable charging location) which provides the smallest combined first and second route profile costs w(p1), w(p2). In a variant, the matching algorithm may identify the first and second route profiles p1, p2 for which either the first route profile cost w(p1) or the second route profile cost w(p2) is smallest.

The matching algorithm may be implemented to determine the sum of the first and second route profile costs w(p1), w(p2) for discrete pairings of the first vehicle V1 with each of a plurality of second vehicles V2. The matching algorithm determines which pairing of the first and second vehicles V1, V2 has the smallest combined first and second route profile costs w(p1), w(p2). This determined pairing represents the most suitable matching of the first and second vehicles V1, V2 to perform the vehicle-to-vehicle charging. The matching algorithm may identify a plurality of available second vehicles V2 to enable the user to make an appropriate selection, for example taking account of user preferences.

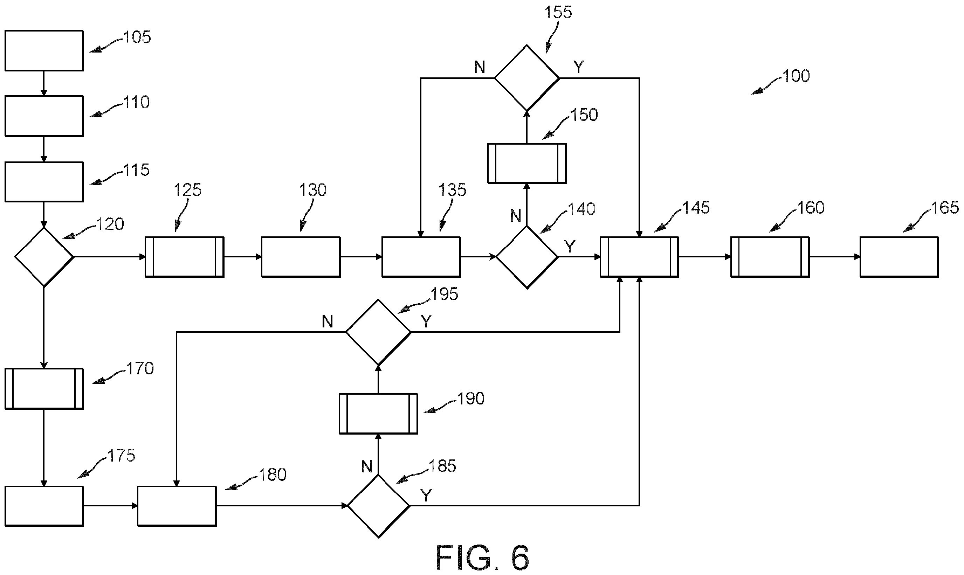

A flow chart 100 representing the operation of the vehicle matching system 1 is shown in Figure 6. A system activation indication is received (BLOCK 105). A determination is made of the location and configuration of the second vehicles V2 available to provide a charging function (BLOCK 110). Each currently active mobile application associated with a first vehicle V1 that is set to a receiver mode may be monitored and have associated with it a list of proximate providers. In other words, users with active mobile applications that have set the second vehicles V2 in a provider mode within a certain route profile cost bound. Alternatively, or in addition, a just in time approach may be used to calculate all proximate providers following receipt of a charging request. A charging request is received from the first vehicle V1 (BLOCK 115). A check is performed to determine if charging of the first vehicle V1 is required at its current location, i.e. stationary charging of the first vehicle V1 (BLOCK 120). If stationary charging is required, the first travel capacity value $\alpha$ is set to zero ($\alpha=0$) and the second travel capacity value $\beta$ is set greater than zero ($\beta>0$) (BLOCK 125). The first location s1 and the charging requirement of the first vehicle V1 are determined (BLOCK 130). The matching algorithm identifies a candidate second vehicle V2 to perform the charging operation based on a shortest path comparison (BLOCK 135). A check is performed to determine if the candidate second vehicle 2 is identified as being always available to perform charging operations (BLOCK 140). If the candidate second vehicle V2 is identified as being always available, the matching server 3 outputs, for example by way of transmission via the wireless communication network, the map data to the first and second vehicles V1, V2 (BLOCK 145). If the candidate second vehicle V2 is not identified as being always available, the matching server 3 outputs an invitation to the second vehicle V2. (BLOCK 150). A check is performed to determine if the invitation is accepted by the second vehicle V2 (BLOCK 155). If the invitation is accepted by the second vehicle V2 (indicating that the second vehicle V2 is available to perform the charging operation), the matching server 3 outputs the map data to the first and second vehicles V1, V2 (BLOCK 145). If the invitation is declined by the second vehicle V2 (indicating that the second vehicle V2 is not available to perform the charging operation), the matching algorithm identifies another candidate second vehicle V2 to perform the charging operation based on a shortest path comparison (BLOCK 135). The vehicle-to-vehicle charging operation is performed and completion is detected by the vehicle matching system 1 (BLOCK 160). The process is terminated (BLOCK 165).

If the check determines that charging of the first vehicle V2 is to be performed in-route (BLOCK 120), the first travel capacity value $\alpha$ is set as being greater than zero ($\alpha>0$) (BLOCK 170). The first travel capacity value $\alpha$ may be determined in dependence on the first state of charge SOC1. The first location s1 and the first destination d1 are collected from the first vehicle V1 (BLOCK 175). A charging requirement of the first vehicle V1 may also be collected. The charging requirement may comprise an indication of the amount of charge required or as a charging time. The matching algorithm identifies one or more candidate second vehicle V2 to perform the charging operation (BLOCK 180). The matching algorithm identifies the one or more candidate second vehicle V2 along a route from the first location s1 to the first destination d1. A check is performed to determine if the candidate second vehicle 2 is identified as being always available to perform charging operations (BLOCK 185). If the candidate second vehicle V2 is identified as being always available, the matching server 3 outputs the map data to the first and second vehicles V1, V2 (BLOCK 145). If the candidate second vehicle V2 is not identified as being always available, the matching server 3 outputs an invitation to the second vehicle V2. (BLOCK 190). A check is performed to determine if the invitation is accepted by the second vehicle V2 (BLOCK 195). If the invitation is accepted by the second vehicle V2 (indicating that the second vehicle V2 is available to perform the charging operation), the matching server 3 outputs the map data to the first and second vehicles V1, V2 (BLOCK 145). If the invitation is declined by the second vehicle V2 (indicating that the second vehicle V2 is not available to perform the charging operation), the matching algorithm identifies another candidate second vehicle V2 to perform the charging operation based on a shortest path comparison (BLOCK 180). The vehicle-to-vehicle charging operation is performed and completion is detected by the vehicle matching system 1 (BLOCK 155). The process is terminated (BLOCK 160).

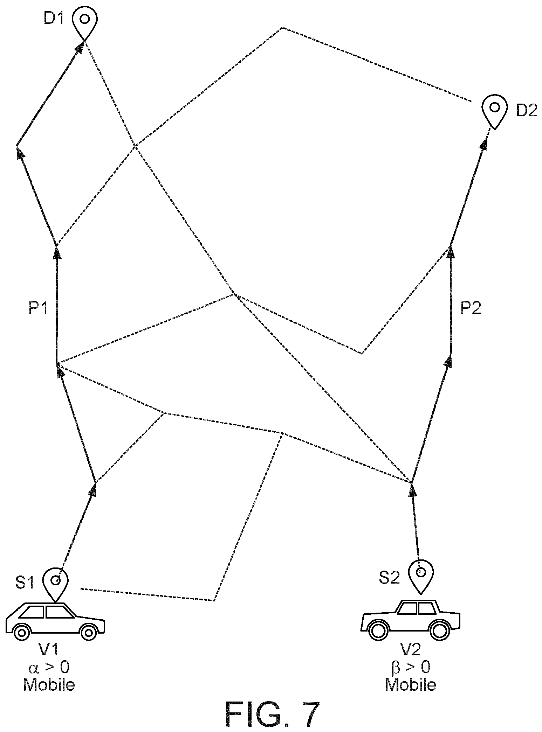

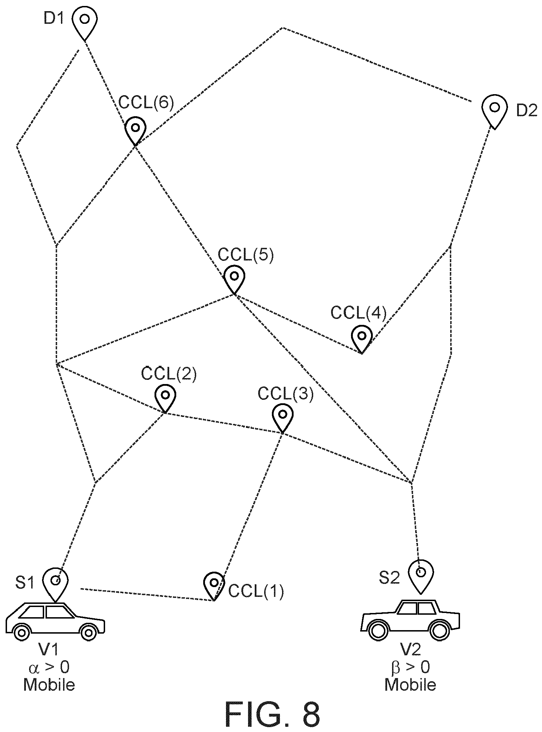

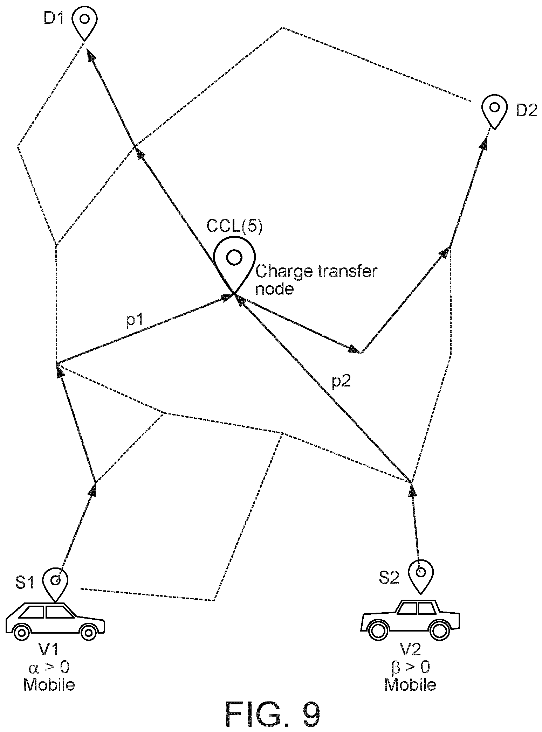

The operation of the matching algorithm in a first scenario is illustrated in Figures 7, 8 and 9. The first and second route profiles p1, p2 are determined for the first and second vehicles V1, V2. The first and second route profiles p1, p2 each comprise one or more directed edges in a graph G representing the road network. The first and second route profiles p1, p2 are represented by continuous lines in Figure 7. The other sections of the road network are represented by broken (dashed) lines in Figure 7. The first route profile p1 is mapped from the first location s1 of the first vehicle V1 to the first destination d1; and the second route profile p2 is mapped from the second location s2 of the second vehicle V2 to the second destination d2. As shown in Figure 8, at least one candidate charging location CCL(n) is identified. The or each candidate charging location CCL(n) corresponds to a node in the graph G. The or each candidate charging location CCL(n) represents a location where the vehicle-to-vehicle charging may be performed. The first and second travel capacity values $\alpha$, $\beta$ are both greater than zero (i.e., $\alpha>0$ AND $\beta>0$) in this scenario. The or each candidate charging location CCL(n) is represented by a node in the graph G representing the first and second route profiles P1, P2. A route profile cost w(p) is calculated for each first and second route profiles p1, p2 in respect of each candidate charging location CCL(n). The candidate charging location CCL(n) which corresponds to the smallest route profile cost w(p) is identified and the first and second route profiles P1, P2 determined, as illustrated in Figure 9. The identified charging location CCL(n) is defined as the charge transfer node. The first and second route profiles P1, P2 are modified to include an intersection at the charge transfer node. The modified first and second route profiles P1, P2 are output to the first and second vehicles V1, V2.

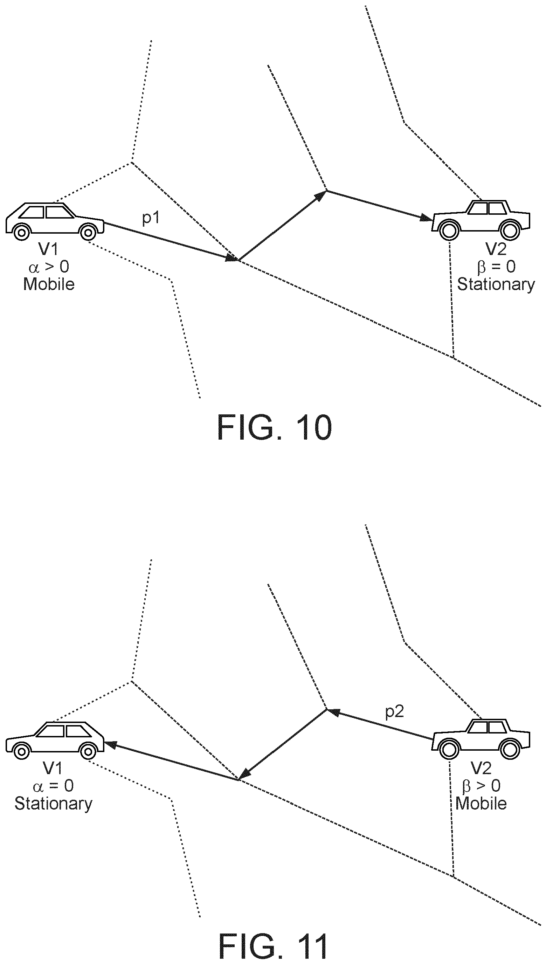

The operation of the matching algorithm is illustrated in a second scenario in Figure 10. The first travel capacity value $\alpha$ is greater than zero (i.e., $\alpha>0$). However, the second travel capacity value $\beta$ is set as equal to zero (i.e., $\beta=0$). In this scenario, the second vehicle V2 is stationary. A first route profile p1 is determined for the first vehicle V1, as shown in Figure 10. The first route profile p1 is mapped from the first location s1 of the first vehicle V1 to the first destination d1, which in this scenario corresponds to the second location s2 of the second vehicle V2. The first route profile P1 is output to the first vehicle V1.

The operation of the matching algorithm is illustrated in a third scenario in Figure 11. The first travel capacity value $\alpha$ is set as equal to zero (i.e., $\alpha$-0). The second travel capacity value $\beta$ is greater than zero (i.e., $\beta>0$). In this scenario, the first vehicle V1 is stationary. A second route profile p2 is determined for the second vehicle V1, as shown in Figure 11. The second route profile p2 is mapped from the second location s2 of the second vehicle V2 to the second destination d2, which in this scenario corresponds to the first location s1 of the first vehicle V1. The second route profile P2 is output to the second vehicle V2.

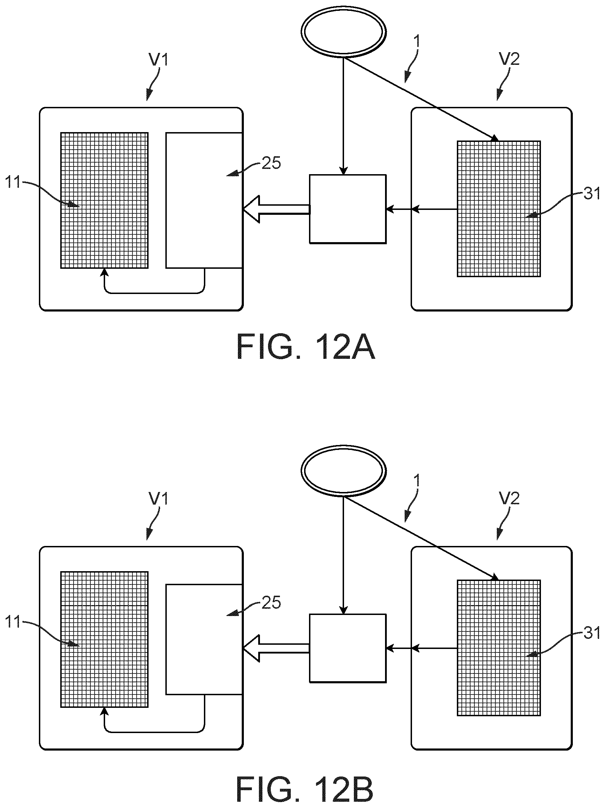

The first and second vehicles V1, V2 are connected to each other by a cable to perform charging. A schematic representation of the first and second vehicles V1, V2 connected to perform AC-DC vehicle-to-vehicle charging is shown in Figure 12A. An off-board converter (i.e. separate from the first and second vehicles V1, V2) may be provided to convert the AC to DC for charging the first traction battery 11. The vehicle matching system 1 may optionally control operation of the off-board converter, for example to initiate, halt, pause or interrupt a charging process. The off-board converter may be omitted if the first charging unit 25 comprises an AC-DC converter. A schematic representation of the first and second vehicles V1, V2 connected to perform DC vehicle-to-vehicle charging is shown in Figure 12B. An off-board converter (i.e. separate from the first and second vehicles V1, V2) may optionally be provided to provide the DC charging for the first traction battery 11. The vehicle matching system 1 may optionally control operation of the off-board converter, for example to initiate, halt, pause or interrupt a charging process.

It will be appreciated that various changes and modifications can be made to the present invention without departing from the scope of the present application.

LABELS FOR FIGURE 6 FLOW CHART 100

| 105 | RECEIVE SYSTEM ACTIVATION INDICATION |
|---|---|
| 110 | DETECT LOCATION & CONFIGURATION OF PROXIMATE PROVIDER(S) |
| 115 | RECEIVE CHARGE REQUEST FROM RECEVIER |
| 120 | STATIONARY OR IN-ROUTE CHARGE? |
| 125 | CONFIGURE $\alpha=0$ AND SET REQUIREMENT $\beta>0$ |
| 130 | GATHER RECEIVER LOCATION AND CHARGING REQUIREMENT |
| 135 | SELECT PROVIDER USING SHORTEST PATH COMPARISON AND $\beta>0$ FOR PROXIMATE PROVIDER(S) |
| 140 | "ALWAYS ACCEPT" ACTIVATED BY PROVIDER |
| 145 | PROVIDE MAP DATA TO RECEIVER AND PROVIDER |
| 150 | GENERATE AND TRANSMIT INVITATION TO PROVIDER |
| 155 | CONFIRMATION FROM PROVIDER |

(continued)

| 160 | DETECT COMPLETION |
|---|---|
| 165 | END PROCESS |
| 170 | CONFIGURE $\alpha > 0$ BASED ON STATE OF CHARGE OF RECEIVER |
| 175 | GATHER RECEIVER LOCATION AND CHARGING REQUIREMENT |
| 180 | SELECT PROVIDER USING COST (wP(n)) COMPARISON AND $\alpha > 0$ FOR PROVIDER(S) IN-ROUTE |
| 185 | "ALWAYS ACCEPT" ACTIVATED BY PROVIDER |
| 190 | GENERATE AND TRANSMIT INVITATION TO PROVIDER |
| 195 | CONFIRMATION FROM PROVIDER |

**Claims**

1. A vehicle matching system for matching a pair of vehicles for vehicle-to-vehicle charging, the vehicle matching system comprising a controller configured to:

   receive a charging request from a first vehicle comprising a first traction battery;
   determine a first location of the first vehicle and a first state of charge of the first traction battery;
   identify a second vehicle comprising a second traction battery;
   determine a second location of the second vehicle and a second state of charge of the second traction battery;
   identify a charging location for connecting the first and second vehicles to each other to perform vehicle-to-vehicle charging;
   determine a first route profile comprising the first location and the charging location and determine a first cost for the first vehicle to traverse the first route profile;
   match the first vehicle to the second vehicle in dependence on the determined first cost; and
   output, to at least one of the first vehicle and second vehicle, charging location data identifying the identified charging location.

2. A vehicle matching system as claimed in claim 1, wherein the first cost is determined in dependence on the first state of charge of the first traction battery.

3. A vehicle matching system as claimed in claim 1 or claim 2, wherein the charging location corresponds to the second location.

4. A vehicle matching system as claimed in any one of claims 1, 2 or 3, wherein the vehicle matching system is configured to:

   determine a first destination of the first vehicle, the first route profile comprising the first location, the charging location and the first destination;
   wherein the first cost is determined for the first vehicle to traverse the first route profile from the first location to the first destination.

5. A vehicle matching system as claimed in any one of the preceding claims, wherein the controller is configured to determine a second route profile from the second location to the charging location and to determine a second cost for the second vehicle to traverse the second route profile.

6. A vehicle matching system as claimed in claim 5, wherein the second cost is determined in dependence on the second state of charge of the second traction battery.

7. A vehicle matching system as claimed in claim 5 or claim 6, wherein the vehicle matching system is configured to:

   determine a second destination of the second vehicle, the second route profile comprising the second location, the charging location and the second destination;

wherein the second cost is determined for the second vehicle to traverse the second route profile from the second location to the second destination.

**8.** A vehicle matching system as claimed in any one of the preceding, wherein the controller is configured to identify a plurality of candidate charging locations and to select the charging location from the plurality of candidate charging locations.

**9.** A vehicle matching system as claimed in claim 8, wherein the controller is configured to determine at least one first route profile from the first location to each of the plurality of candidate charging locations and to determine the first cost for traversing the or each first route profile.

**10.** A vehicle matching system as claimed in claim 8 or claim 9 when dependent directly or indirectly on claim 5, wherein the controller is configured to determine at least one second route profile from the second location to each of the plurality of candidate charging locations and to determine the second cost for traversing the or each second route profile.

**11.** A vehicle matching system as claimed in claim 10, wherein the controller is configured to sum the first cost and the second cost in respect of each of the candidate charging locations and to select the charging location which corresponds to the lowest sum of the first and second costs.

**12.** A vehicle matching system as claimed in any one of claims 8 to 11, wherein the controller is configured to select a plurality of target locations and to determine a first estimated arrival time of the first vehicle and a second estimated arrival time of the second vehicle at each of the plurality of target locations;
wherein identifying the plurality of candidate charging locations comprises selecting the or each said target location for which the first and second estimated arrival times are within a predetermined time period.

**13.** A vehicle matching system as claimed in any one of the preceding claims, wherein the vehicle-to-vehicle charging is performed at least partially to charge the first traction battery using the second traction battery.

**14.** A method of matching a pair of vehicles for vehicle-to-vehicle charging, the method comprising:

identifying a first vehicle comprising a first traction battery;
determining a first location of the first vehicle and a first state of charge of the first traction battery;
identifying a second vehicle comprising a second traction battery;
determining a second location of the second vehicle and a second state of charge of the second traction battery;
identifying a charging location for connecting the first and second vehicles to each other to perform vehicle-to-vehicle charging;
determining a first route profile comprising the first location and the charging location and determining a first cost for the first vehicle to traverse the first route profile; and
matching the first vehicle to the second vehicle in dependence on the determined first cost.

**15.** A non-transitory computer-readable medium having a set of instructions stored therein which, when executed, cause a processor to perform the method claimed in claim 14.

FIG. 1

FIG. 2

FIG. 3

3

SOC1
LOCD1/DESD1
VREF1

60

67

61

69

P1 (V1)
P2 (V2)

SOC2
LOCD2/DESD2
VREF2

65

63

# FIG. 4

FIG. 5

FIG. 6

FIG. 7

FIG. 8

FIG. 9

FIG. 10

FIG. 11

V1

11

25

V2

31

1

## FIG. 12A

V1

11

25

V2

31

1

## FIG. 12B

Europäisches Patentamt

European Patent Office

Office européen des brevets

# EUROPEAN SEARCH REPORT

**Application Number**

**EP 23 16 4121**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/011436 A1 (MITSUBISHI ELECTRIC CORP [JP]; MITSUBISHI ELECTRIC RES LAB [US] ET AL.) 26 January 2012 (2012-01-26) | 1-6,8-15 | INV.<br>B60L53/65<br>B60L53/14 |
| A | * paragraph [0008] - paragraph [0071]; figures 2-4,7,8 * | 7 | B60L53/30<br>B60L53/66<br>B60L58/12 |
| X | JP 2021 072062 A (SOFTBANK CORP) 6 May 2021 (2021-05-06) | 1,2,4,5, 7,8,11, 13 | B60L53/67 |
| A | * paragraph [0001] - paragraph [0045] * | 12,14,15 | |

**TECHNICAL FIELDS SEARCHED (IPC)**

**B60L**

The present search report has been drawn up for all claims

| Place of search | Date of completion of the search | Examiner |
|---|---|---|
| The Hague | 10 July 2023 | Cuk, Vladimir |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                      

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 4121

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2023

| Patent document cited in search report | | Publication date | Patent family member(s) | | Publication date |
|---|---|---|---|---|---|
| WO 2012011436 | A1 | 26-01-2012 | US | 2012041804 A1 | 16-02-2012 |
| | | | WO | 2012011436 A1 | 26-01-2012 |
| JP 2021072062 | A | 06-05-2021 | JP | 6940576 B2 | 29-09-2021 |
| | | | JP | 2021072062 A | 06-05-2021 |

EPO FORM P0459

For more details about this annex : see Official Journal of the European Patent Office, No. 12/82